# EUROPEAN PATENT APPLICATION

(11) **EP 3 220 700 A1**
(43) Date of publication of application: **20.09.2017**
(21) Application number: 17157193.8
(22) Date of filing: 21.02.2017
(51) Int. Cl.: H04W 64/00

(54) **METHOD AND SYSTEM TO CALCULATE A LOCATION**

(30) Priority: 14.03.2016 JP 2016049858
(71) Applicant: FUJITSU LIMITED, Kawasaki-shi Kanagawa 211-8588 (JP)
(72) Inventor: SAWADA, Kensuke, Kawasaki-shi, Kanagawa 211-8588 (JP); MORI, Shinichiro, Kawasaki-shi, Kanagawa 211-8588 (JP)
(74) Representative: Cooper-Rolfe, Elizabeth Louise

(57) **Abstract**

A method for calculating a location of a positioning target terminal, the method includes: receiving beacon signals transmitted by each of a plurality of beacon devices around a positioning target terminal; first calculating, based on the received beacon signals, location information indicating locations of a plurality of mobile beacon devices included in the plurality of beacon devices; excluding one or more first mobile beacon devices having similar azimuth directions from the positioning target terminal among the plurality of mobile beacon devices based on the calculated location information when calculating the location of the positioning target terminal.

## Description

### [FIELD]

The present disclosure is related to a method, a program, and a system.

### [BACKGROUND]

There is known a radio beacon technology for estimating location information of a device such as a user terminal (User Equipment; hereinafter, called a "UE"), which moves and is typified by a mobile phone or the like, by using received electric field strength information (Received Signal Strength Indicator; hereinafter, called "RSSI") of a radio wave transmitted with a fixed output by an equipment serving as a transmission source and an installation location (location information) of the equipment.

In this technology, by using a property that the RSSI is attenuated at a fixed rate in accordance with a distance from the transmission source, a distance between the UE and the equipment serving as the transmission source is calculated, thereby estimating a location of the UE at that point of time.

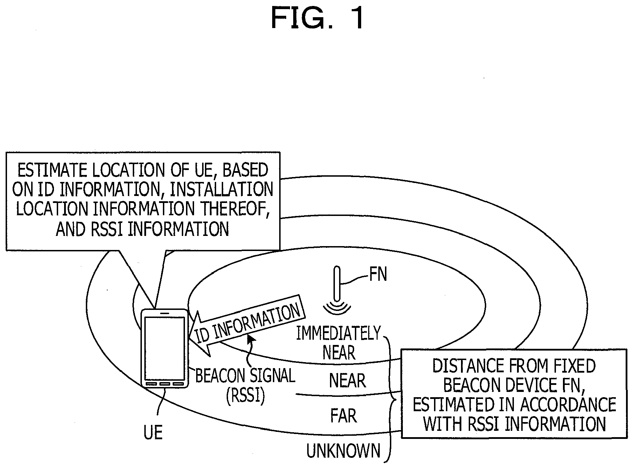

In a case where, as illustrated in, for example, FIG. 1, a fixed radio beacon device FN is used as the equipment serving as the transmission source, the radio beacon device FN utilizes an advertisement signal of Bluetooth (registered trademark) Low Energy (hereinafter, called "BLE") as a beacon signal and calculates a distance between the radio beacon device FN and the UE by using RSSI information of the beacon signal, identification information (hereinafter, called "ID information") of the radio beacon device FN, and installation location information of the radio beacon device FN, the identification information being included in the beacon signal. It is possible to specify the location of the UE, based on the installation location information of the radio beacon device FN. Furthermore, in a case where the UE is able to receive beacon signals of radio beacon devices FN, it is possible to calculate location information of the UE with a higher degree of accuracy by using a trilateration method or the like.

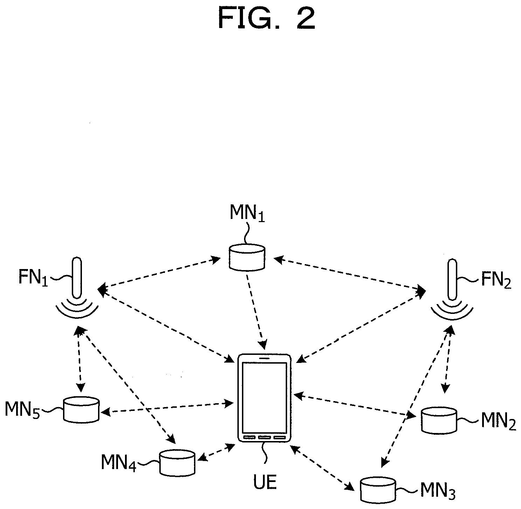

On the other hand, there is known a radio beacon technology for estimating a location of a UE by using a radio beacon device that moves. In this technology, as illustrated in, for example, FIG. 2, locations of radio beacon devices MN₁ to MN₅ that move are detected in another way, for example, in a way of using fixed radio beacon devices FN₁ and FN₂ that remain stationary and locations of which are known. For this reason, the radio beacon devices MN₁ to MN₅ that move are regarded as fixed radio beacon devices. By doing so, the UE is able to estimate the location information of the self-terminal by using pieces of RSSI information of respective beacon signals transmitted by the beacon device MN₁ to MN₅ that move and locations of which are known.

For the sake of convenience, in the present specification, the fixed radio beacon devices used in the former configuration are called "fixed beacon devices" or "fixed nodes", and the mobile radio beacon devices used in the latter configuration are called "mobile beacon devices" or "mobile nodes". As for each of these, the UE that receives a corresponding one of the beacon signals calculates the location of the self-terminal.

In order to estimate the location of the UE in the above-mentioned environment in which the fixed nodes and the mobile nodes are mixed, a distance between each of a large number of fixed nodes and the UE and a distance between each of fixed nodes and mobile nodes and the UE are calculated. Furthermore, by using distance information calculated in such a way, the location information of the UE is calculated. However, in such a method, in a case where the number of nodes (the number of beacons) becomes large, a calculation amount increases, a processing load turns out to become high, and power consumption becomes high, thereby exceeding a processing capacity of the UE.

In contrast, there is proposed a method for calculating a location of a UE only by using beacon signals of nodes that are included in mobile nodes and that actually remain stationary at that point of time (in other words, nodes that are movable and that temporarily stop).

According to the above-mentioned proposal, by reducing the number of beacon signals to be used, it is advantageously possible to decrease a processing period of time and to reduce power consumption. In addition, it is advantageously possible to use only fixed nodes and mobile nodes in stationary states. Furthermore, it is beneficially possible to detect whether or not a mobile node is in a stationary state, by observing a corresponding one of beacon signals and a change in information of a distance from a fixed node or a mobile node that remains stationary.

### [CITATION LIST]

### [NON PATENT LITERATURE]

[NON PATENT LITERATURE 1] Higuchi et al., Information Processing Society of Japan (IPSJ) 72nd National Convention, 3ZD-2, 2010.

### [PATENT LITERATURE]

[PATENT LITERATURE 1] Japanese Patent No. 5792412
[PATENT LITERATURE 2] Japanese Laid-open Patent Publication No. 2005-099018
[PATENT LITERATURE 3] Japanese National Publication of International Patent Application No. 2014-502339

### [SUMMARY]

### [TECHNICAL PROBLEM]

In the above-mentioned conventional technologies, in, for example, a case where all beacons to move remain stationary, it is difficult to appropriately select beacons to be used for estimating a location of a UE. Therefore, power consumption of the UE may increase and exceed a processing capacity of the UE, and it may become difficult to estimate the location with accuracy.

Therefore, in an embodiment of one aspect of the invention, it is desirable to estimate a location of a terminal with accuracy while reducing power consumption.

### [SOLUTION TO PROBLEM]

According to an embodiment of one aspect of the invention, a method for calculating a location of a positioning target terminal, the method includes: receiving beacon signals transmitted by each of a plurality of beacon devices around a positioning target terminal; first calculating, based on the received beacon signals, location information indicating locations of a plurality of mobile beacon devices included in the plurality of beacon devices; excluding one or more first mobile beacon devices having similar azimuth directions from the positioning target terminal among the plurality of mobile beacon devices based on the calculated location information when calculating the location of the positioning target terminal.

### [ADVANTAGEOUS EFFECTS OF INVENTION]

According to an embodiment of one aspect of the invention, it is advantageously possible to estimate a location of a terminal with accuracy while reducing power consumption.

### [BRIEF DESCRIPTION OF DRAWINGS]

The invention is described, by way of example only, with reference to the following drawings, in which:
FIG. 1 illustrates an example of positioning of a UE with use of a fixed beacon device.
FIG. 2 illustrates an example of positioning of a UE with use of mobile beacon devices.
FIG. 3 is a diagram for explaining positioning of a UE according to an embodiment.
FIG. 4 illustrates an example of a functional configuration of a positioning server according to an embodiment.
FIG. 5 illustrates an example of a fixed node information table according to an embodiment.
FIG. 6 illustrates an example of a hardware configuration of the positioning server according to an embodiment.
FIG. 7 is a flowchart illustrating an example of location estimation processing of a UE according to an embodiment.
FIG. 8 is a flowchart illustrating an example of location calculation processing of mobile nodes according to an embodiment.
FIG. 9 is a diagram for explaining location calculation of mobile nodes according to an embodiment.
FIG. 10 is a flowchart illustrating an example of primary filter processing according to an embodiment.
FIG. 11 is a flowchart illustrating an example of secondary filter processing according to an embodiment.
FIG. 12 is a flowchart illustrating an example of tertiary filter processing according to an embodiment.

### [DESCRIPTION OF EMBODIMENTS]

Hereinafter, an embodiment of the present disclosure will be described with reference to attached drawings. Note that, in the specification and the drawings, the same symbol is attached to a configuration element having practically the same functional configuration and the redundant description thereof will be omitted.

### [Outline of Location Estimation]

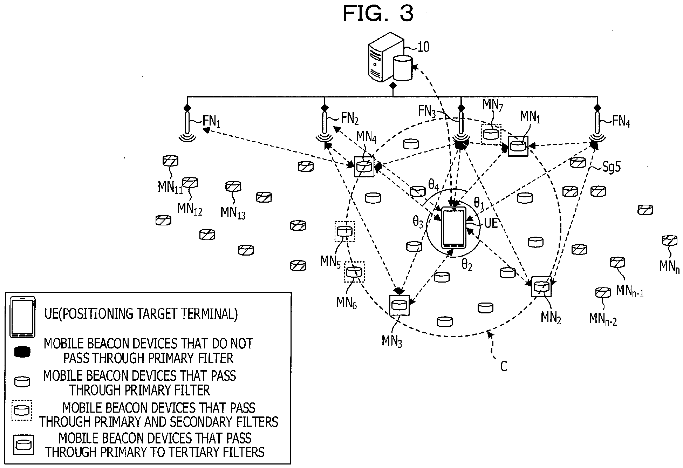

First, an outline of location estimation according to an embodiment of the present disclosure will be described with reference to FIG. 3. FIG. 3 is a diagram for explaining an outline of location estimation according to an embodiment. In FIG. 3, by using multi-stage filtering, mobile nodes to be used for location estimation of a UE are determined. In FIG. 3, a positioning server 10 aggregates pieces of information received by fixed nodes FN₁ to FN₄ serving as respective receiving stations and information received by the UE, thereby estimation a location of the UE. Hereinafter, the fixed nodes FN₁ to FN₄ are also collectively called "fixed nodes FN". In addition, mobile nodes MN₁ to MNₙ are also collectively called "mobile nodes MN". Note that while four fixed nodes FN₁ to FN₄ are installed in the present embodiment, the number of fixed nodes is not limited to this and only has to be one or more. In the same way, as for the mobile nodes MN, "n" indicating the number of the mobile nodes MN₁ to MNₙ only has to be an integer greater than or equal to one.

Each of beacon signals observed by the UE has ID information of a node that transmits the relevant beacon signal, and an RSSI information. In a primary filter of the present embodiment, mobile nodes MN located within a given distance from the UE are selected. For the selection, RSSIs observed by the UE are used. By preliminarily investigating the strengths of RSSIs in a case where mobile nodes MN are located within the given distance, the selection becomes available. In FIG. 3, in a case where the UE receives a beacon signal of an RSSI having a strength greater than or equal to a predetermined level, a mobile node is selected as a corresponding one of the mobile nodes MN, located within the given distance from the UE. For this reason, mobile nodes MN located outside, for example, a circle C having the given distance from the UE in FIG. 3 are mobile nodes MN that do not pass through the primary filter, and are not used for location estimation of the UE.

Next, in a secondary filter, mobile nodes MN that pass through the primary filter are further narrowed down by other filtering. In the secondary filter, mobile nodes MN having near azimuth directions viewed from the UE are excluded, and mobile nodes MN (in this regard, however, three or more) that surround the UE in respective different directions are selected as far as possible.

Mobile nodes MN (remaining stationary) that pass through the primary filter and the secondary filter in this way are used, and the location of the UE is estimated. Accordingly, it is possible to decrease a processing load at a time of location estimation of the UE and to reduce power consumption. Note that, based on filtering performed by the single secondary filter, the same advantage as the above-mentioned advantage may be expected without using the primary filter.

Furthermore, in FIG. 3, the mobile nodes MN₁ to MN₇ that pass through the primary filter and the secondary filter are further narrowed down based on filtering performed by a tertiary filter. In the tertiary filter, three or more mobile nodes MN (in this regard, however, three or more) that are separate by approximately equal angles with respect to the UE are selected, for example. In, for example, FIG. 3, the mobile beacon devices MN₁ to MN₄ that are arranged at respective approximately equal angles (in other words, θ₁, θ₂, θ₃, and θ₄ are the approximately equal angles) with respect to the UE are selected.

Mobile nodes MN that pass through the primary filter to the tertiary filter in this way are used, and the location of the UE is estimated. Accordingly, it is possible to decrease a processing load at a time of location estimation of the UE and to reduce power consumption.

Note that while, in the present embodiment, filtering of the mobile nodes MN is performed based on the RSSIs of the beacon signals, arrival times of the respective beacon signals or signal radio wave arrival angles may be used for relative locations between the fixed nodes and the mobile nodes without limitation to RSSIs, in the location estimation of the UE according to the present embodiment.

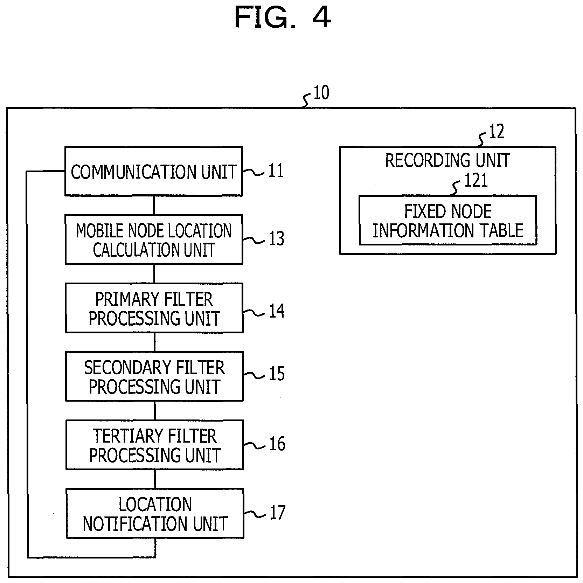

The location calculation processing and the filtering processing of the mobile nodes, described above, are performed by the positioning server 10. The positioning server 10 is coupled to the fixed nodes FN₁ to FN₄ and aggregates pieces of RSSI information detected by the respective fixed nodes FN₁ to FN₄ and pieces of RSSI information detected by the UE, thereby performing filtering of the mobile nodes MN, based on the RSSI information. In what follows, an example of a functional configuration of the positioning server 10 will be described with reference to FIG. 4. The positioning server 10 is an example of an information processing device for radio positioning. The positioning server 10 may be a server on a cloud.

### [Functional Configuration]

FIG. 4 illustrates an example of a functional configuration of a positioning server according to an embodiment. The positioning server 10 includes a communication unit 11, a recording unit 12, a mobile node location calculation unit 13, a primary filter processing unit 14, a secondary filter processing unit 15, a tertiary filter processing unit 16, and a location notification unit 17.

The communication unit 11 detects pieces of RSSI information of respective beacon signals received from the mobile nodes MN and the UE by the fixed nodes FN and pieces of RSSI information of respective beacon signals received from the mobile nodes MN by the UE.

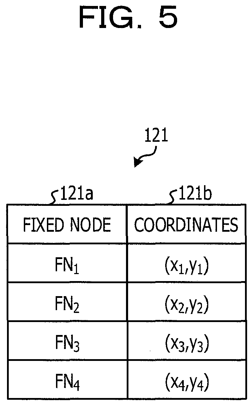

The recording unit 12 records therein a fixed node information table 121. The recording unit 12 records therein various kinds of data and various kinds of programs. The fixed node information table 121 records therein locations of the fixed beacon devices FN (hereinafter, also called "fixed nodes"). FIG. 5 illustrates an example of the fixed node information table 121 according to an embodiment. The fixed node information table 121 includes coordinate information 121b for each fixed node 12a (each fixed beacon device FN).

From pieces of RSSI information received from the respective fixed nodes FN and the pieces of coordinate information 121b of the respective fixed nodes 121a recorded in the fixed node information table 121, the mobile node location calculation unit 13 calculates the location of the respective mobile nodes MN.

From among calculated mobile nodes MN, the primary filter processing unit 14 removes mobile nodes MN other than mobile nodes MN for which distances thereof from the UE serving as a positioning target fall within a predetermined distance. Mobile nodes for each of which RSSI (Si) observed by the UE ≥ Sₜₕ [dBm] is satisfied are left as outputs of the primary filter, for example. The threshold value Sₜₕ is determined in advance by a preliminary experiment or the like. As a result, in the example of FIG. 3, mobile nodes located within the predetermined circle C centered at the UE are left, and mobile nodes located outside the circle C are removed by the filtering. In other words, the mobile nodes MN located outside the predetermined distance are subjected to the filtering and are not used for the location estimation of the UE.

By using the secondary filter, the secondary filter processing unit 15 further narrows down the mobile nodes MN that pass through the primary filter. In other words, the secondary filter processing unit 15 removes mobile nodes MN having near azimuth directions viewed from the UE and selects mobile nodes MN (in this regard, however, three or more) that surround the UE in respective different directions as far as possible. In the example illustrated in FIG. 3, as a result of the secondary filter processing, the mobile nodes MN₁ to MN₇ that are separated by about a given distance C from the UE are selected, for example.

In other words, based on pieces of RSSI information of respective beacon signals observed by the fixed nodes, the secondary filter processing unit 15 only causes pieces of RSSI information of respective predetermined mobile nodes MN to pass therethrough. First, four fixed nodes FNᵢ (1 ≤ i ≤ 4) in an adjacent location relationship are determined. The RSSIs of respective mobile nodes MNⱼ (1 ≤ j ≤ m) are observed by each of the fixed nodes FNᵢ. Indexes j of mobile nodes MNⱼ each having a maximum or minimum RSSI observed by a corresponding one of the fixed nodes FNᵢ are recorded. "j" corresponds to eight types at a maximum and corresponds to one type at a minimum. The secondary filter processing unit 15 leaves, as outputs of the secondary filter, mobile nodes each having the index j recorded as above and removes mobile nodes other than those, based on the filtering.

The tertiary filter processing unit 16 further narrows down the mobile beacon devices MN that pass through the primary filter and the secondary filter, by using the tertiary filter. In other words, the tertiary filter processing unit 16 removes mobile beacon devices MN having near azimuth directions viewed from the UE and selects mobile beacon devices MN (in this regard, however, three or more) that surround the UE in respective different directions as far as possible. In, for example, FIG. 3, the mobile nodes MN₅ and MN₆ having near azimuth directions viewed from the UE with respect to the mobile node MN₃ are removed, and the mobile node MN₇ having a near azimuth direction viewed from the UE with respect to the mobile node MN₁ is excluded.

As a result, in the tertiary filter, mobile nodes other than mobile nodes arranged at respective approximately equal angles with respect to the UE are removed from among the mobile nodes MN₁ to MN₇. In, for example, FIG. 3, the mobile nodes MN₁ to MN₄ that are arranged at respective approximately equal angles (in other words, θ₁, θ₂, θ₃, and θ₄ are the approximately equal angles) with respect to the UE and that are arranged at respective approximately equal distances on the circumference of the circle C are selected.

The location notification unit 17 notifies the terminal UE of the pieces of RSSI information received from the respective selected mobile nodes MN₁ to MN₄ and pieces of location information of the respective mobile nodes MN₁ to MN₄. Based on the pieces of RSSI information and pieces of location information of the respective mobile nodes MN₁ to MN₄, given notice of, the UE estimates distances between the UE and the respective mobile nodes MN₁ to MN₄ and performs location estimation of the UE by using trilateration or the like. A low of distance attenuation in a free space is used for a method for estimating distances between nodes, based on pieces of RSSI information.

### [Hardware Configuration]

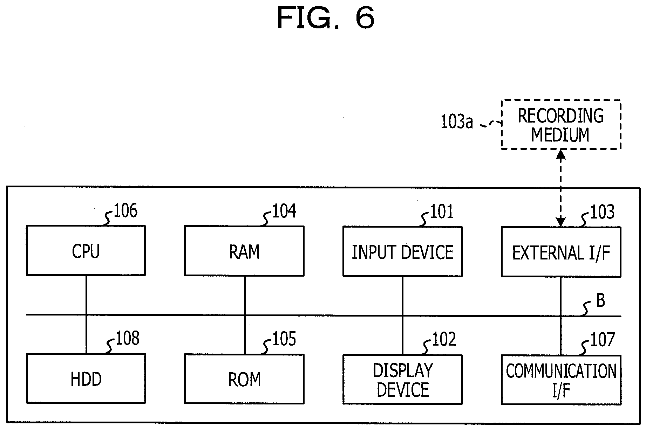

Next, a hardware configuration of the positioning server 10 according to the present embodiment will be described with reference to FIG. 6. FIG. 6 illustrates an example of a hardware configuration of the positioning server according to an embodiment. The positioning server 10 includes an input device 101, a display device 102, an external I/F 103, a random access memory (RAM) 104, a read only memory (ROM) 105, a central processing unit (CPU) 106, a communication I/F 107, a hard disk drive (HDD) 108, and so forth, and these are coupled to one another via a bus B.

The input device 101 includes a keyboard, a mouse, and so forth and is used for inputting information to the positioning server 10. The display device 102 includes a display and so forth and displays various kinds of processing results. The communication I/F 107 is an interface that couples the positioning server 10 to a network. For this reason, the positioning server 10 is able to transmit and receive signals to and from the fixed nodes FN and the UE via the communication I/F 107.

The HDD 108 is a non-volatile storage device that stores therein programs and data. Examples of the stored programs and data include a basic software to control the entire positioning server 10 and application software. Various kinds of databases, programs, and so forth may be stored in the HDD 108, for example.

The external I/F 103 is an interface with an external device. Examples of the external device includes a recording medium 103a. For this reason, the positioning server 10 is able to perform reading and/or writing of the recording medium 103a via the external I/F 103. Examples of the recording medium 103a includes a compact disc (CD), a digital versatile disc (DVD), an SD memory card, and a Universal Serial Bus memory (USB memory).

The ROM 105 is a non-volatile semiconductor memory (storage device) able to hold internal data even in a case of turning off a power source. In the ROM 105, a program and data such as a network configuration are stored. The RAM 104 is a volatile semiconductor memory (storage device) that temporarily holds a program and data. The CPU 106 is an arithmetic circuit that loads programs and data onto the RAM 104 from the above-mentioned storage devices (for example, the HDD 108, the ROM 105, and so forth) and that performs processing, thereby realizing control of an entire device and mounted functions.

In the positioning server 10 according to the present embodiment, based on such a configuration, by using data and an information processing program stored within the ROM 105 or the HDD 108, the CPU 106 performs information processing that is related to filtering of the mobile nodes MN and that is used for location estimation of the UE. The information processing used for the location estimation of the UE includes the location calculation processing of the mobile nodes, the primary filter processing, the secondary filter processing, and the tertiary filter processing.

Note that information stored in the fixed node information table 121 may be stored in the RAM 104, the HDD 108, or a server or the like on a cloud coupled to the positioning server 10 via the network.

In addition, FIG. 4 illustrates a block diagram focused on functions, and individual units indicated by these functional blocks may be realized only by hardware, only by software, or by a combination of hardware and software.

### [Entire Processing]

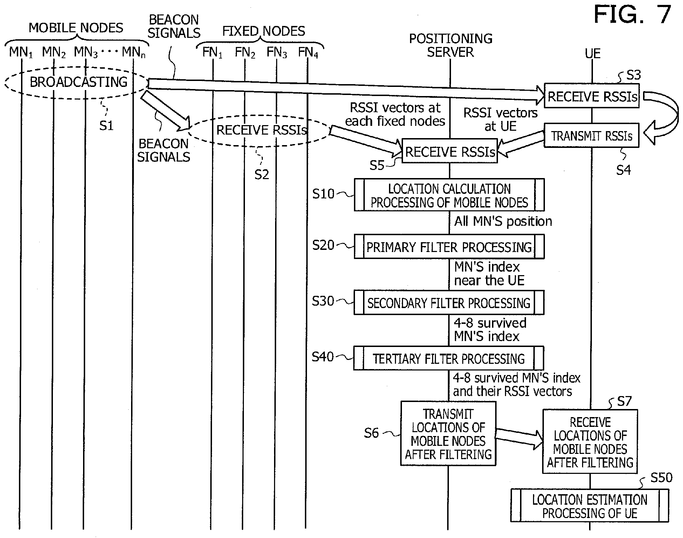

Next, entire processing of location estimation of a UE according to the present embodiment will be described with reference to FIG. 7. FIG. 7 is a flowchart illustrating an example of the location estimation processing of a UE according to an embodiment. FIG. 7 illustrates processing operations to be performed by the individual mobile nodes MN₁, MN₂, ···, and MNₙ, fixed nodes FN₁, FN₂, FN₃, and FN₄, positioning server 10, and UE, in order from the left side of the plane of paper.

Upon initiating the present processing, beacon signals are transmitted by the respective mobile nodes MN by using broadcasting (step S1). The beacon signals are received by the fixed nodes FN₁ to FN₄ and the UE (steps S2 and S3). The communication unit 11 in the positioning server 10 receives pieces of RSSI information of the respective beacon signals received by each of the fixed nodes FN₁ to FN₄ and pieces of ID information of the respective mobile nodes MN (step S5).

The UE transmits, to the positioning server 10, the pieces of RSSI information of the respective received beacon signals and the pieces of ID information of the respective mobile nodes MN (step S4). The positioning server 10 receives the pieces of RSSI information and the pieces of ID information, transmitted by the UE (step S5).

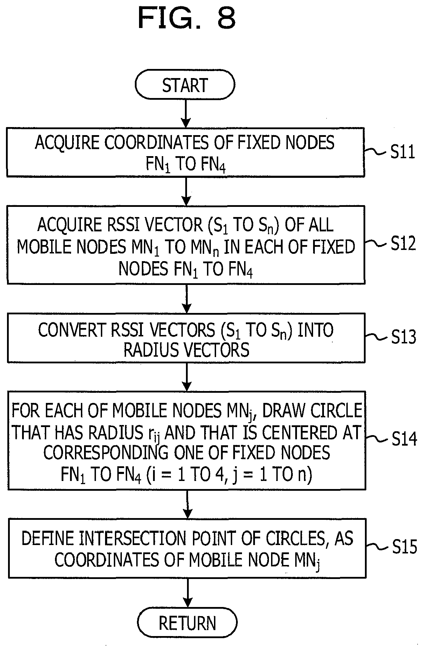

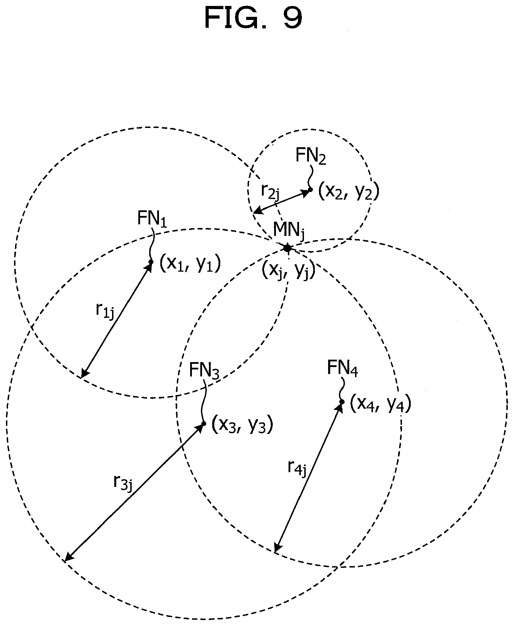

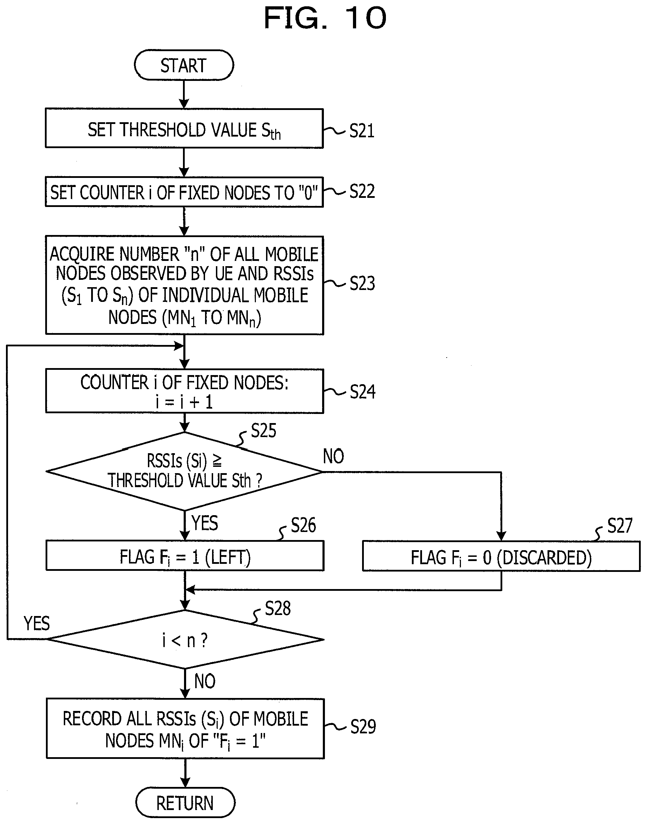

Next, the positioning server 10 performs location calculation processing of all the mobile nodes MN (step S10). The location calculation processing of the mobile nodes MN will be described later by using FIG. 8 and FIG. 9. Next, the positioning server 10 performs the primary filter processing (step S20). For this reason, mobile nodes MN located within a predetermined distance from the UE are selected, and remaining mobile nodes MN are removed. The primary filter processing will be described by using FIG. 10 after the location calculation processing of the mobile nodes MN.

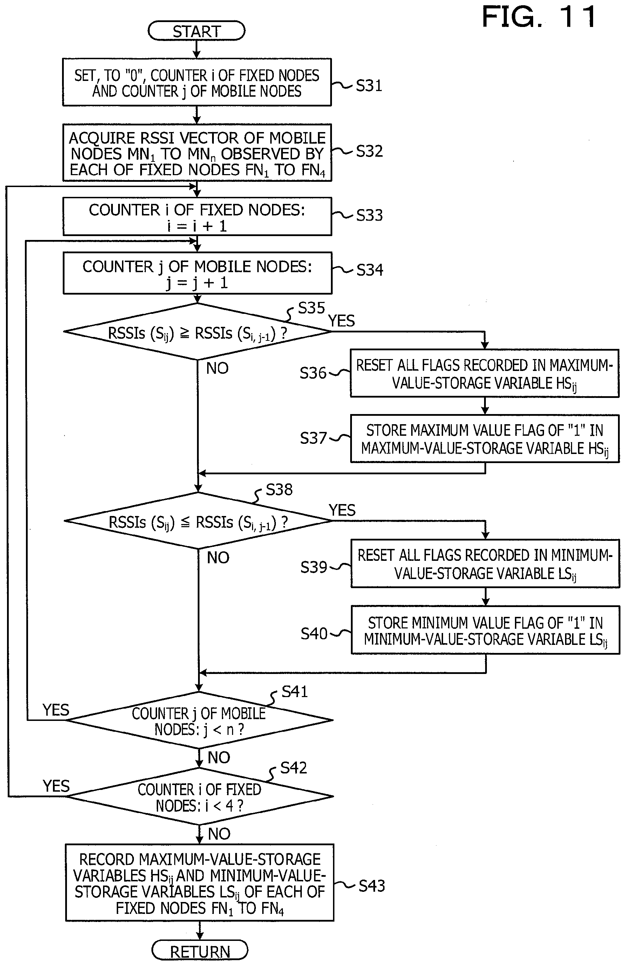

Next, the positioning server 10 performs the secondary filter processing (step S30). For this reason, from among the mobile nodes MN selected by the primary filter, one to eight mobile nodes MN for which distances thereof from the UE are roughly equal to one another are selected. The secondary filter processing will be described by using FIG. 11 after the primary filter processing.

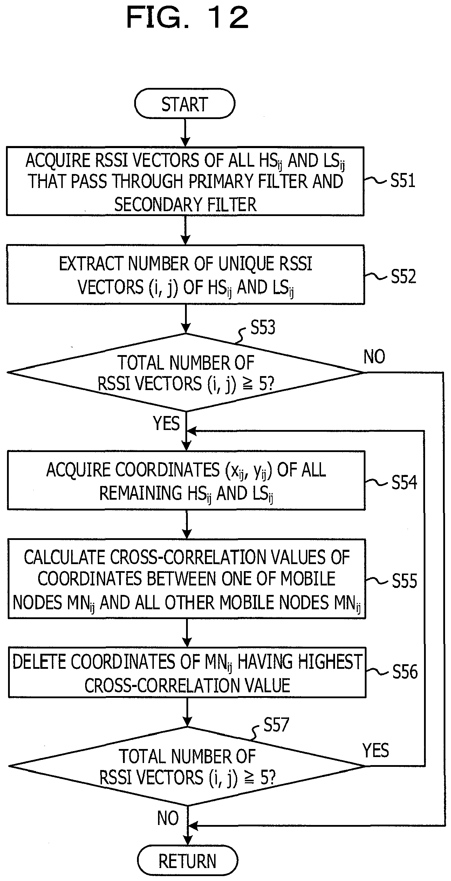

Next, the positioning server 10 performs the tertiary filter processing (step S40). For this reason, from among the mobile nodes MN selected by the secondary filter, three or more mobile nodes MN for which angles between directions of adjacent mobile nodes MN are approximately equal to each other around the UE are selected. The tertiary filter processing will be described by using FIG. 12 after the secondary filter processing.

Next, the positioning server 10 transmits, to the UE, pieces of location information of the respective mobile nodes MN that pass through the primary to tertiary filters (step S6). The UE receives the pieces of location information of the respective mobile nodes MN, transmitted by the positioning server 10 (step S7). Based on the received pieces of location information of the respective mobile nodes MN, the UE performs location estimation processing of the UE itself by using trilateration or the like (step S50) and terminates the present processing once. The present processing is repeated at predetermined intervals.

### [Location Calculation Processing of Mobile Nodes]

Next, the location calculation processing of mobile nodes according to the present embodiment, called in S10 in FIG. 7, will be described with reference to FIG. 8 and FIG. 9. FIG. 8 is a flowchart illustrating an example of location calculation processing of mobile nodes according to the present embodiment. FIG. 9 is a diagram for explaining location calculation of mobile nodes according to the present embodiment.

In the location calculation processing of mobile nodes MN in FIG. 8, first the mobile node location calculation unit 13 acquires pieces of coordinate information that indicate the installation locations of the respective fixed nodes FN₁ to FN₄ and that are recorded in the fixed node information table 121 (step S11). In the present embodiment, the coordinates of the fixed nodes FN₁ to FN₄ are two-dimensional absolute coordinates (xᵢ, yᵢ) and i = 1 to 4 is satisfied. The unit of each element of the "x" and "y" of the coordinates is m (meter).

Next, the mobile node location calculation unit 13 acquires an RSSI vector of all the mobile nodes MN₁ to MNₙ, received by each of the fixed nodes FN₁ to FN₄ (step S12). Components of the RSSI vector are RSSIs (S₁ to Sₙ) of the respective mobile nodes MN₁ to MNₙ.

Next, for each of the fixed nodes FN₁ to FN₄, the mobile node location calculation unit 13 converts acquired RSSI information into a radius (radius) vector (step S13). Elements of the radius vector in each of the fixed nodes FN₁ to FN₄ are (rᵢ₁, rᵢ₂, rᵢ₃,···, and rᵢₙ), for example, and the number of the elements is equal to the number "n" of the mobile nodes MN. The unit of each of the elements of the radius vector is meter (m).

Next, for each of the mobile nodes MNⱼ, the mobile node location calculation unit 13 draws a circle that has a radius rᵢⱼ and that is centered at a corresponding one of the fixed nodes FN₁ to FN₄ (i = 1 to 4, j = 1 to n) (j = 1 to n) (step S14). The mobile node location calculation unit 13 defines, as coordinate information of the mobile node MNⱼ, an intersection point of as many circles as the number of the fixed nodes FN₁ to FN₄ (step S15).

As above, locations of the respective mobile nodes MNⱼ (j = 1 to n) are calculated. In FIG. 9, circles of the radii r₁ⱼ, r₂ⱼ, r₃ⱼ, and r₄ⱼ are drawn with the fixed nodes FN₁ to FN₄ as respective center points. Coordinates (xⱼ, yⱼ) of an intersection point of the four circles correspond to an example of a location of the mobile node MNⱼ calculated by the mobile node location calculation unit 13. The unit of each of elements of the coordinates (xⱼ, yⱼ) indicating the example of a location of the mobile node MNⱼ is meter (m).

### [Primary Filter Processing]

Next, the primary filter processing according to the present embodiment will be described with reference to FIG. 10. FIG. 10 is a flowchart illustrating an example of primary filter processing according to an embodiment. If the present processing is called in S20 in FIG. 7, the primary filter processing unit 14 sets a threshold value Sₜₕ (step S21). The threshold value Sₜₕ may be set to, for example, -60 dBm. -60 dBm corresponds to the strength of an RSSI of a node located about 5 m away from the UE. Note that the threshold value Sₜₕ may be set every time the primary filter processing in FIG. 10 is performed or may be set only once at the beginning of the primary filter processing.

Next, the primary filter processing unit 14 resets a counter i of the fixed nodes FN to "0" (step S22). Next, the primary filter processing unit 14 acquires the number "n" of all mobile nodes observed by the UE and an RSSI vector of the individual mobile nodes (MN₁ to MNₙ) (step S23). Components of the RSSI vector are RSSIs (S₁ to Sₙ) of the respective mobile nodes (MN₁ to MNₙ).

Next, the primary filter processing unit 14 increments the counter i of the fixed nodes FN by "1" (step S24). Next, the primary filter processing unit 14 determines whether or not the RSSI (Sᵢ) is greater than or equal to the threshold value Sₜₕ (step S25). In a case of determining that the RSSI (Sᵢ) is greater than or equal to the threshold value Sₜₕ, the primary filter processing unit 14 substitutes "1" into a flag Fᵢ (step S26), and in a case of determining that the RSSI (Sᵢ) is less than the threshold value Sₜₕ, the primary filter processing unit 14 substitutes "0" into the flag Fᵢ (step S27). The flag Fᵢ is set to "0" in a case where the RSSI (Sᵢ) is removed by the primary filter, the flag Fᵢ is set to "1" in a case where the RSSI (Sᵢ) is caused to pass through the primary filter, and the flag Fᵢ is set to "0" in a case where the RSSI (Sᵢ) is caused not to pass through the primary filter. For this reason, mobile nodes MN located outside the circle C that is illustrated in FIG. 3 and that corresponds to the threshold value Sₜₕ become mobile nodes MN that do not pass through the primary filter because the flags Fᵢ thereof are set to "0". In addition, mobile nodes MN located within the circle C become mobile beacon devices MN that pass through the primary filter because the flags Fᵢ thereof are set to "1".

Returning to FIG. 10, next the primary filter processing unit 14 determines whether or not the counter i is less than the number "n" of all mobile nodes (step S28). In a case of determining that the counter i is less than the number "n" of all mobile nodes, the primary filter processing unit 14 returns to step S24 and adds "1" to the counter i (step S24), thereby repeating the processing operations in steps S25 to S28. In a case where it is determined, in step S28, that the counter i is not less than the number "n" of all mobile nodes, the recording unit 12 records all RSSIs (Sᵢ) of the mobile nodes MNᵢ each having the flag Fᵢ of "1" (step S29) and terminates the present processing.

Based on the primary filter processing described above, only pieces of RSSI information of respective mobile nodes located within the predetermined distance from the UE are recorded in the positioning server 10, as information used for positioning of the UE. For this reason, it is possible to reduce the number of mobile nodes used for estimation of the location of the UE. For this reason, as for the estimation of the location of the UE, a load on processing is decreased, and power consumption is reduced.

### [Secondary Filter Processing]

Next, the secondary filter processing according to the present embodiment will be described with reference to FIG. 11. FIG. 11 is a flowchart illustrating an example of secondary filter processing according to an embodiment. The present processing is performed after the primary filter processing in FIG. 10 finishes. If the present processing is called in S30 in FIG. 7, the secondary filter processing unit 15 resets, to "0", the counter i of the fixed nodes FN and a counter j of the mobile nodes MN (step S31). Next, the secondary filter processing unit 15 acquires an RSSI vector of the mobile nodes MN₁ to MNₙ observed by each of the fixed nodes FN₁ to FN₄ (step S32). Components of the RSSI vector are Sᵢ₁, Sᵢ₂, Sᵢ₃, ···, Sᵢⱼ, ···, and Sᵢₙ, and the unit thereof is dBm.

Next, the secondary filter processing unit 15 increments the counter i of the fixed nodes FN by "1" (step S33) and increments the counter j of the mobile nodes MN by "1" (step S34).

Next, the secondary filter processing unit 15 determines whether or not the RSSI (Sᵢⱼ) is greater than or equal to the RSSI (Sᵢ, ⱼ₋₁) (step S35). In a case of determining that the RSSI (Sᵢⱼ) is greater than or equal to the RSSI (Sᵢ, ⱼ₋₁), the secondary filter processing unit 15 resets all flags recorded in the maximum-value-storage variable HSᵢⱼ (step S36). Next, the secondary filter processing unit 15 stores a maximum value flag of "1" in the maximum-value-storage variable HSᵢⱼ (step S37). In a case of determining that the RSSI (Sᵢⱼ) is less than the RSSI (Sᵢ, ⱼ₋₁), the secondary filter processing unit 15 proceeds to step S38 without change.

Next, the secondary filter processing unit 15 determines whether or not the RSSI (Sᵢⱼ) is less than or equal to the RSSI (Sᵢ, _{j - 1}) (step S35). In a case of determining that the RSSI (Sᵢⱼ) is less than or equal to the RSSI (Sᵢ, _{j - 1}), the secondary filter processing unit 15 resets all flags recorded in a minimum-value-storage variable LSᵢⱼ (step S39) and stores a minimum value flag of "1" in the minimum-value-storage variable LSᵢⱼ (step S40). In a case of determining that the RSSI (Sᵢⱼ) is greater than the RSSI (Sᵢ, _{j - 1}), the secondary filter processing unit 15 proceeds to step S41 without change.

Next, the secondary filter processing unit 15 determines whether or not the counter j of the mobile nodes is less than "n" (step S41). In a case of determining that the counter j of the mobile nodes is less than "n", the secondary filter processing unit 15 returns to step S34 and increments the counter j of the mobile nodes by "1", thereby repeating the processing operations in steps S35 to S41 (a loop of the mobile nodes).

In a case of determining, in step S41, that the counter j of the mobile nodes is not less than "n", the secondary filter processing unit 15 determines whether or not the counter i of the fixed nodes is less than four (step S42). In a case of determining that the counter i of the fixed nodes is less than four, the secondary filter processing unit 15 returns to step S33.

The secondary filter processing unit 15 increments, in step S33, the counter i of the fixed nodes by "1" and repeats the processing operations in steps S34 to S42. The secondary filter processing unit 15 repeats the processing operations in steps S33 to S42 until it is determined, in step S42, that the counter i of the fixed nodes is not less than four (a loop of the fixed nodes). In a case of determining that the counter i of the fixed nodes is not less than four, the secondary filter processing unit 15 proceeds to step S44, and the recording unit 12 records the maximum-value-storage variables HSᵢⱼ and the minimum-value-storage variables LSᵢⱼ of each of the fixed nodes FN₁ to FN₄, and terminates the present processing.

In the secondary filter processing described above, the indexes j of the mobile nodes MNⱼ each having a maximum or minimum RSSI observed by a corresponding one of the fixed nodes FNᵢ are recorded. "j" corresponds to eight types at a maximum and corresponds to one type at a minimum. The secondary filter processing unit 15 leaves, as outputs of the secondary filter, mobile nodes each having the index j recorded as above and removes mobile nodes other than those, based on the filtering.

In, for example, the example of FIG. 3, from among mobile nodes MN located within the circle C, mobile nodes MN located at approximately equal distances from the UE pass through the secondary filter, and mobile nodes MN other than those do not pass through the secondary filter. In other words, the mobile nodes MNⱼ each having the index j of the maximum-value-storage variable HSᵢⱼ or minimum-value-storage variable LSᵢⱼ in which "1" is set turn out to be mobile node that pass through the primary filter and the secondary filter.

### [Tertiary Filter Processing]

Next, the tertiary filter processing according to the present embodiment will be described with reference to FIG. 12. FIG. 12 is a flowchart illustrating an example of tertiary filter processing according to an embodiment. The present processing is performed after the secondary filter processing in FIG. 10 finishes. If the present processing is called in S40 in FIG. 7, the tertiary filter processing unit 16 acquires the number of RSSI vectors (i, j) of mobile nodes MNᵢⱼ each corresponding to one of all the maximum-value-storage variables HSᵢⱼ and minimum-value-storage variables LSᵢⱼ that pass through the primary filter and the secondary filter (step S51).

Next, from among the RSSI vectors (i, j) of the mobile nodes MNᵢⱼ each corresponding to one of the maximum-value-storage variables HSᵢⱼ and the minimum-value-storage variables LSᵢⱼ, the tertiary filter processing unit 16 extracts the number of unique RSSI vectors (i, j) (step S52).

Here, as examples of the unique RSSI vectors (i, j), the mobile beacon devices MN₁ to MN₇ located on the circumference of the circle C illustrated in FIG. 3 may be cited. As other examples of the unique RSSI vectors (i, j), RSSI vectors of mobile nodes nearest to the respective fixed nodes FN₁ to FN₄ may be cited.

Next, the tertiary filter processing unit 16 determines whether or not the total number of the extracted RSSI vectors (i, j) is greater than or equal to five (step S53). In a case of determining that the total number of the RSSI vectors (i, j) is less than or equal to four, the tertiary filter processing unit 16 terminates the present processing.

In a case of determining, in step S53, that the total number of the RSSI vectors (i, j) is greater than or equal to five, the tertiary filter processing unit 16 acquires coordinates (xᵢⱼ, yᵢⱼ) of mobile beacon devices MNᵢⱼ for which all remaining maximum-value-storage variables HSᵢⱼ and all remaining minimum-value-storage variables LSᵢⱼ are recorded and that pass through the primary filter and the secondary filter (step S54).

Next, the tertiary filter processing unit 16 calculates cross-correlation values of coordinates between one of the mobile beacon devices MNᵢⱼ and all the other mobile beacon devices MNᵢⱼ (step S55). Next, the tertiary filter processing unit 16 deletes coordinates of the mobile beacon device MNᵢⱼ having the highest cross-correlation value (step S56). Next, the tertiary filter processing unit 16 determines whether or not the total number of RSSI vectors (i, j) after the deletion is greater than or equal to five (step S57). In a case of determining that the total number of the RSSI vectors (i, j) is greater than or equal to five, the tertiary filter processing unit 16 returns to step S54 and repeats the processing operations in steps S54 to S57 until the total number of the RSSI vectors (i, j) becomes less than or equal to four. In a case of determining, in step S57, that the total number of the RSSI vectors (i, j) is less than or equal to four, the tertiary filter processing unit 16 terminates the present processing.

Based on the tertiary filter processing described above, in, for example, the example of FIG. 3, the mobile beacon devices MN₁ to MN₇ located on the circumference of the circle C illustrated in FIG. 3 may be cited as examples of the unique RSSI vectors (i, j). From among those, the tertiary filter processing unit 16 excludes mobile beacon devices MN having near azimuth directions viewed from the UE and selects mobile nodes MN (in this regard, however, three or more) that surround the UE in respective different directions as far as possible. In, for example, FIG. 3, the mobile nodes MN₅ and MN₆ each having the highest cross-correlation value with respect to the mobile node MN₃ are removed, and the mobile node MN₇ having the highest cross-correlation value with respect to the mobile node MN₁ is excluded.

For this reason, the mobile nodes MN₁, MN₂, MN₃, and MN₄ arranged at respective approximately equal angles for which θ₁, θ₂, θ₃, and θ₄ between adjacent mobile nodes MN and the UE are approximately 90 degrees pass through the tertiary filter, and the mobile nodes MN₅, MN₆, and MN₇ other than those do not pass through the tertiary filter.

The UE is notified of the pieces of RSSI information of the respective mobile nodes MN₁, MN₂, MN₃, and MN₄ selected in such a way as described above. Based on the pieces of RSSI information of the respective mobile nodes MN₁, MN₂, MN₃, and MN₄, given notice of, the UE performs location estimation of the UE by using trilateration or the like. A low of distance attenuation in a free space may be used for a method for estimating distances between nodes, based on pieces of RSSI information.

As above, based on the primary to tertiary filter processing operations according to the present embodiment, in an environment in which a large number of mobile beacon devices MN exist around the UE serving as a positioning target, it is possible to decrease the number of mobile beacon devices MN used for calculating the location of the UE. For this reason, by decreasing, in the UE, a load on processing for estimating a location, a processing period of time is shortened, and power consumption is reduced.

While, as above, the information processing device, the information processing method, and the information processing program, used for radio positioning, are explained based on the above-mentioned embodiment, the information processing device, the information processing method, and the information processing program, used for radio positioning and related to the present disclosure, are not limited to the above-mentioned embodiment and may be variously altered or modified within the scope of the present disclosure. In addition, in a case where examples of the above-mentioned embodiment and examples of a modification exist, these may be combined to the extent that these do not contradict each other.

Without performing, for example, the first filter processing (FIG. 8) called in step S20 in FIG. 7, the second filter processing (FIG. 11) called in step S30 in FIG. 7 may be performed. In other words, while it is desirable that the first filter processing is performed, the first filter processing does not have to be performed.

In addition, the third filter processing (FIG. 12) called in step S40 in FIG. 7 does not have to be performed after the second filter processing is performed. In other words, while it is desirable that the third filter processing is performed, the third filter processing does not have to be performed.

By performing the second filter processing, N (N ≥ 3) mobile nodes for which adjacent mobile nodes viewed from the UE have location relationships each forming an angle of 360 degrees / N or each drawing nigh to the angle are selected based on pieces of location information of respective mobile nodes. For this reason, it is possible to exclude mobile nodes having near azimuth directions viewed from the UE and to perform calculation for positioning of the UE by using a small number of mobile nodes MN surrounding the UE as far as possible. For this reason, it is possible to accurately estimate the location of the UE. In addition, by removing mobile nodes other than mobile nodes that are selected by the second filter processing and that surround the UE, a load on processing for estimating a location is decreased in the UE, thereby achieving a reduction in a processing period of time and a decrease in power consumption.

Furthermore, based on the first filter processing and the third filter processing, the number of mobile nodes used at a time of estimation of a location, performed by the UE, is further decreased. Accordingly, a load on processing is decreased, thereby achieving a reduction in a processing period of time and a decrease in power consumption.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

### [REFERENCE SIGNS LIST]

- 10:: positioning server
- 11:: communication unit
- 12:: recording unit
- 13:: mobile node location calculation unit
- 14:: primary filter processing unit
- 15:: secondary filter processing unit
- 16:: tertiary filter processing unit
- 17:: location notification unit
- 121:: fixed node information table
- MN:: mobile node
- FN:: fixed node
- UE:: terminal

## Claims

1. A method for calculating a location of a positioning target terminal, the method comprising:
receiving beacon signals transmitted by each of a plurality of beacon devices around a positioning target terminal;
first calculating, based on the received beacon signals, location information indicating locations of a plurality of mobile beacon devices included in the plurality of beacon devices;
excluding one or more first mobile beacon devices having similar azimuth directions from the positioning target terminal among the plurality of mobile beacon devices based on the calculated location information when calculating the location of the positioning target terminal.

2. The method according to claim 1, further comprising:
selecting a plurality of second mobile beacon devices from among the plurality of mobile beacon devices by the excluding the one or more first mobile beacon devices; and
second calculating, based on the selected plurality of second mobile beacon devices, the location of the positioning target terminal.

3. The method according to claim 2, further comprising:
specifying, from among the plurality of mobile beacon devices, a plurality of third mobile beacon devices located within a predetermined distance from the positioning target terminal,
wherein the selecting selects the plurality of second mobile beacon devices from among the specified plurality of third mobile beacon devices.

4. The method according to claim 3, wherein
the plurality of beacon devices includes a plurality of fixed beacon devices, and
for each of the plurality of fixed beacon devices, the specifying specifies, as the plurality of third mobile beacon devices, a fourth mobile beacon device located at a minimum distance from one of the plurality of fixed beacon devices and a fifth mobile beacon device located at a maximum distance from one of the plurality of fixed beacon devices.

5. The method according to claim 3, wherein
the receiving includes receiving beacon signals from the plurality of beacon devices by using the positioning target terminal,
the beacon signals each include identification information for identifying a beacon device, and
based on the identification information and received electric field strengths of each of plurality of beacon signals, the specifying specifies the plurality of third mobile beacon devices.

6. A program which, when executed on one or more apparatuses, causes the one or more apparatuses to carry out the method according to any of claims 1 to 5.

7. The program according to claim 6, wherein
the one or more apparatuses include a server device and the positioning target terminal,
the first calculating and the selecting in the method according to any of claims 2 to 5 are performed by the server device, and
the second calculating in the method according to any of claims 2 to 5 is performed by the positioning target terminal.

8. A system comprising:
means for receiving beacon signals transmitted by each of a plurality of beacon devices around a positioning target terminal;
means for calculating, based on the received beacon signals, location information indicating locations of a plurality of mobile beacon devices included in the plurality of beacon devices; and
means for exclude one or more first mobile beacon devices having similar azimuth directions from the positioning target terminal among the plurality of mobile beacon devices based on the calculated location information when calculating the location of the positioning target terminal.

9. The system according to claim 8, further comprising:
means for selecting a plurality of second mobile beacon devices from among the plurality of mobile beacon devices by the excluding the one or more first mobile beacon devices; and
means for calculating, based on the selected plurality of second mobile beacon devices, the location of the positioning target terminal.

10. The system according to claim 9, further comprising:
means for specifying, from among the plurality of mobile beacon devices, a plurality of third mobile beacon devices located within a predetermined distance from the positioning target terminal,
wherein the means for selecting selects the plurality of second mobile beacon devices from among the specified plurality of third mobile beacon devices.

11. The system according to claim 10, wherein
the plurality of beacon devices includes a plurality of fixed beacon devices, and
for each of the plurality of fixed beacon devices, the means for specifying specifies, as the plurality of third mobile beacon devices, a fourth mobile beacon device located at a minimum distance from one of the plurality of fixed beacon devices and a fifth mobile beacon device located at a maximum distance from one of the plurality of fixed beacon devices.

12. The system according to claim 10, wherein
the means for receiving includes receiving beacon signals from the plurality of beacon devices by using the positioning target terminal,
the beacon signals each include identification information for identifying a beacon device, and
based on the identification information and received electric field strengths of each of plurality of beacon signals, the means for specifying specifies the plurality of third mobile beacon devices.

13. The system according to claim 8, further comprising:
a server device; and
the positioning target terminal,
wherein
the server device includes the means for calculating of the location information indicating locations of a plurality of mobile beacon devices and the means for selecting of the plurality of second mobile beacon devices, and
the positioning target terminal includes the means for calculating of location of the positioning target terminal.
